# EUROPEAN PATENT APPLICATION

(11) **EP 1 909 408 A1**
(43) Date of publication of application: **09.04.2008**
(21) Application number: 05767129.9
(22) Date of filing: 28.07.2005
(51) Int. Cl.: H04B 7/26, H04J 13/00, H04L 1/00

(54) **RADIO TRANSMITTING APPARATUS AND METHOD FOR CONTROLLING DOWNSTREAM TRANSMISSION IN THE SAME**

(71) Applicant: Fujitsu Ltd., Kawasaki-shi, Kanagawa 211-8588 (JP)
(72) Inventor: OOTA, Yoshiyuki c/o FUJITSU LIMITED, Kawasaki-shi Kanagawa 211-8588 (JP)
(74) Representative: Fenlon, Christine Lesley
(86) International application number: PCT/JP2005/013852
(87) International publication number: WO 2007/013159

(57) **Abstract**

The radio transmission apparatus includes: a transmission buffer (1-2) temporarily holds transmission data to be transmitted to a radio terminal (2) through a downlink channel; a transmission parameter determiner (1-4) determines a downlink transmission parameter relating to transmission quality of the downlink radio channel based on downlink channel quality information indicating reception quality of the downlink channel on the radio terminal (2); and a transmission parameter controller (1-11) controls a transmission parameter determined by the transmission parameter determiner, based on at least the downlink channel quality information and information about an amount of downlink transmission data in the transmission buffer (1-2). This makes it possible to determine transmission parameters with consideration paid to a data amount accumulated in the transmission buffer (1-2) in the radio transmission apparatus (1), so that a throughput from the radio transmission apparatus (1) to the radio terminal (2) is improved.

## Description

### TECHNICAL FIELD

The present invention relates to a radio transmission apparatus and a downlink transmission control method for the same apparatus. For example, the invention relates to technology suitable for improving downlink radio channel throughput from a radio transmission apparatus, such as a radio base station, to a radio terminal, such as a mobile telephone.

### BACKGROUND ART

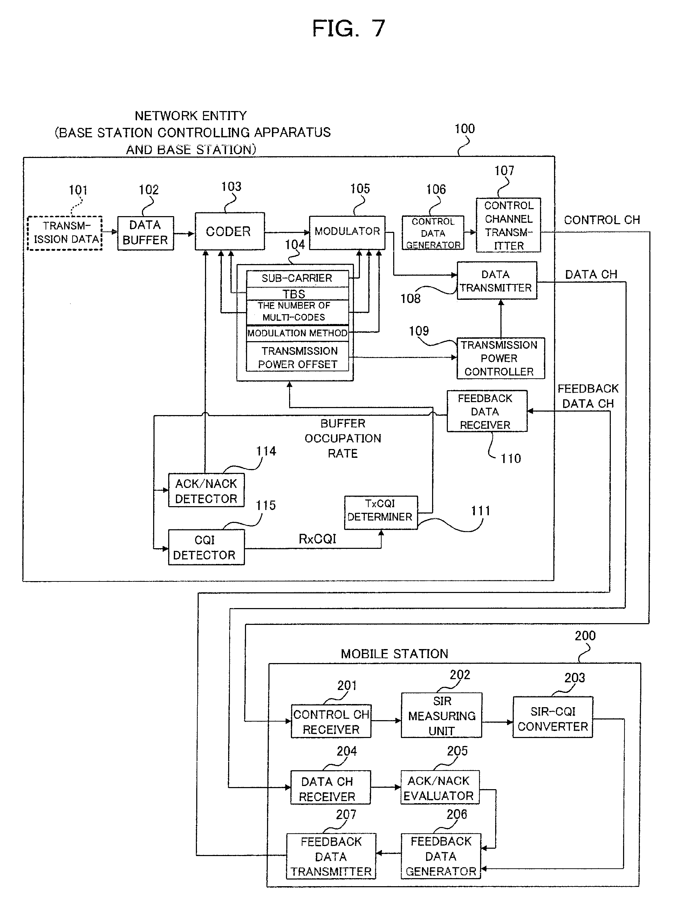

FIG. 7 is a block diagram illustrating a structure of a radio communication system. The radio communication system of FIG. 7 includes: a network entity (radio transmission apparatus) 100 which has functions as a radio network controller (RNC) and as a base transceiver station (BTS); and one or more mobile stations 200 which access the network entity 100 by radio for communication. The network entity 100 has functions of adaptively changing transmission parameters, such as a block size of downlink transmission data to a mobile station 200, the number of dispersion multi-codes (the number of multi-codes), and a modulation method, in accordance with reception environment (reception quality) of the mobile station 200. Thus, the network entity 100, for example, includes: a data buffer 102; a coder (coding unit) 103; a TFRC [TCP (Transmission Control Protocol)-Friendly Rate Control] selector 104; a modulator (modulating unit) 105; a control data generator 106; a control channel transmitter 107; a data transmitter 108; a transmission power controller 109; a feedback data receiver 110; a TxCQI determiner 111; an ACK/NACK detector 114; and a CQI detector 115.

On the other hand, the mobile station 200 has a function of measuring reception quality of a downlink radio channel (downlink) from the network entity 100 and notifying the network entity 100 of such information. Thus, the mobile station 200, for example, includes: a channel (CH) receiver 201; an SIR measuring unit 202; an SIR-CQI converter 203; a data channel (CH) receiver 204; anACK/NACK evaluator 205; a feedback data generator 206; and a feedback data transmitter 207.

Here, in the network entity 100, the data buffer 102 temporarily holds transmission data 101; the coder 103 performs coding of the transmission data 101 from the data buffer 102 in accordance with transmission parameters, such as a transmission block size (TBS) and the number of multi-codes selected (determined) by the TFRC selector 104; the modulator 105 modulates the transmission data used 101 in accordance with the number of sub-carriers, the number of multi-codes, a modulation method, or the like, which have been selected (determined) by the TFRC selector 104.

The control data generator 106 generates control data which is to be transmitted to the mobile station 200 through a downlink control channel. For example, the control data generator 106 generates control data used for reception SIR (Signal-to-InterferenceRadio) measurement, etc. The control channel transmitter 107 transmits the control data generated by the control data generator 106 as data for the control channel.

The data transmitter 108 transmits the transmission data 101 modulated by the modulator 105 through a downlink data channel, and its transmission power is controlled by the transmission power controller 109. The transmission power controller 109 controls transmission power from the data transmitter 108 in accordance with an offset value for transmission power corresponding to the sub-carrier, the transmission block size, the number of multi-code, the modulation method, selected by the TFRC selector 104.

The feedback data receiver 110 receives feedback data (uplink communication data) transmitted from the mobile station 200 through an uplink radio channel (uplink); the ACK/NACK detector 114 detects ACK, which indicates normal reception of the transmission data 101, or NACK, which indicates abnormal reception of the transmission data 101 from the feedback data received by the feedback data receiver 110. In a case where NACK is detected, such is, for example, notified to the coder 103, and the transmission data 101 having already been transmitted is transmitted once again.

The CQI detector 115 detects reception CQI (Channel Quality Indicator) information (RxCQI) from feedback data which is received by the feedback data receiver 110; the TxCQI determiner 111 determines transmission CQI information (TxCQI) on the basis of the CQI information detected by the CQI detector 115. On the basis of the transmission CQI information determined here, the TFRC selector 104 selects transmission parameters such as the number of sub-carriers, a transmission block size, the number of multi-codes, and a modulation method.

On the other hand, in the mobile station 200, the control channel receiver 201 receives control data transmitted from the network entity 100 through a downlink control channel; the SIS measuring unit 202 measures reception SIR based on the control data received by the control channel receiver 201; the SIR-CQI converter 203 converts reception SIR measured by the SIS measuring unit 202 into reception CQI information.

The data channel receiver 204 receives the transmission data 101 transmitted from the network entity 100 through a downlink data channel; the ACK/NACK evaluator 205 evaluates whether or not the data channel receiver 204 has normally received (demodulated, decoded) the transmission data 101. If it has been normally received, the ACK/NACK evaluator 205 determines as ACK, and if it has not been normally received, the ACK/NACK evaluator 205 determines as NACK, in response to the network entity 100.

The feedback data generator 206 generates uplink feedback data to be transmitted to the network entity 100. For example, the feedback data generator 206 generates the CQI information obtained by the SIR-CQI converter 203 and the evaluation result (ACK/NACK) obtained by the ACK/NACK evaluator 205 as feedback data (response information) to the network entity 100. The feedback data transmitter 207 transmits the feedback data generated by the feedback data generator 206 to the network entity 100 through an uplink feedback data channel.

Hereinafter, a description will be made of an operation of a previous mobile system having the construction as described above. The network entity 100 transmits control data toward the mobile station 200 by the control data generator 106 and the control channel transmitter 107 through a downlink control channel, and also, transmits the transmission data 101, which has been subjected to coding and modulation performed by the coder 103 and the modulator 105, to the mobile station 200 by the data transmitter 108 through a downlink data channel.

The mobile station 200 measures reception SIR by the SIR measuring unit 202 based on the above control data received by the control channel receiver 201 through a downlink control channel, and converts the measured value by the SIR measuring unit 202, and the SIR-CQI converter 203 converts the measured value into reception CQI information. This reception CQI information is transmitted to the network entity 100, as feedback data, by the feedback data generator 206 and the feedback data transmitter 207 to the network entity 100 through an uplink feedback data channel.

Inaddition, the mobile station 200 performs ACK/NACK evaluation by the ACK/NACK evaluator 205 for the transmission data 101 received by the data channel receiver 204 through a downlink data channel, and transmits the result (ACK/NACK) to the network entity 100 by the feedback data generator 206 and the feedback data transmitter 207 through an uplink feedback data channel.

On the other hand, on the network entity 100, reception CQI information transmitted from the mobile station 200 through an uplink feedback channel as descried above is detected by the CQI detector 115. On the basis of the reception CQI information, the TxCQI determiner 111 determines transmission CQI information. In accordance with the determined transmission CQI information, the TFRC selector 104 adaptively selects (changes) transmission parameters such as the number of sub-carriers of the transmitting data 101, a transmission block size, the number of multi-codes, and a modulation method, etc.

Further, upon detection, by the ACK/NACK detector 114, of ACK or NACK transmitted from the mobile station 200 through an uplink feedback data channel, if ACK is detected, the next transmission data 101 is read out from the data buffer 102 and is transmitted after being coded and modulated, and if NACK is detected, the transmission data 101 is re-transmitted.
In this manner, according to the previous mobile communication system, transmission parameters, such as the number of sub-carriers, a transmission block size, the number of multi-codes, a modulation method, etc., for the transmission data 101 are adaptively determined in accordance with reception quality information (RxCQI) notified from the mobile station 200, and the transmission data 101 is transmitted in accordance with transmission parameters which are considered to be optimal for the mobile station 200.

In this instance, as techniques for adaptively changing parameters of downlink data communication, as described above, based on reception CQI information, there are techniques supposed in the following patent documents 1 through 3.
The technique of the following patent document 1 is a technique for determining a communication terminal device to which transmission is performed based on a signal for packet transmission, a CQI signal from each communication terminal device, and an ACK/NACK signal and performing MCS selection (determination of a modulation method and a coding rate), based on a CQI signal and a information signal of the number of paths.

The technique of the following patent document 2 is a technique in which SIR of HS-PDSCH (High Speed Physical Downlink Shared Channel) in a destination device of transmission is estimated based on a CQI signal and transmission power. In the technique, on the basis of the estimated SIR, the maximum transmission block size is determined, and MCS corresponding to the determined transmission block size is instructed to a modulator. The technique of the following patent document 3 is a technique in which MCS selection and transmission power determination are performed with consideration paid to limited resources, such as the number of dispersion codes and transmission power, by means of determining a modulation method or an error correction coding method and transmission power based on a notified value (CQI information) of downlink channel information of each communication terminal, thereby improving a throughput.
Patent Document 1: Japanese Patent Application Laid-open No. 2004-166123
Patent Document 1: Japanese Patent Application Laid-open No. 2004-173019
Patent Document 1: Japanese Patent Application Laid-open No. 2004-172981

### DISCLOSURE OF THE PRESENT INVENTION

### PROBLEMS TO BE RESOLVED BY THE PRESENT INVENTION

However, as described in the previous art, determination of transmission parameters (modulation method, coding rate, transmission block size, etc.) based on radio resources such as CQI information or CQI information and transmission power and dispersion codes, the following problem is caused: if much data to be transmitted not less than the determined transmission block size is accumulated in a transmission buffer in a radio transmission apparatus such as a base station, it is impossible to collectively transmit all the data, and at worst, data is discarded.

With the foregoing problems in view, it is an object of the present invention to make it possible to determine transmission parameters with a consideration paid to the data amount accumulated in a transmission buffer in a radio transmission apparatus, so that a downlink (downlink radio channel) throughput from the radio transmission apparatus to radio terminals is improved.

### MEANS FOR RESOLVING THE PROBLEMS

In order to accomplish the above object, the present invention provides the following radio transmission apparatus and the following downlink transmission controlling method for the same apparatus.
(1) As a generic feature, there is provided a radio transmission apparatus, comprising:atransmission buffer which temporarily holds transmission data to be transmitted to a radio terminal through a downlink channel; a transmission parameter determining means which determines a downlink transmission parameter relating to transmission quality of the downlink radio channel based on downlink channel quality information indicating reception quality of the downlink channel on the radio terminal; and a transmission parameter controlling means which controls a transmission parameter determined by the transmission parameter determining means, based on at least the downlink channel quality information and information relating to an amount of downlink transmission data in the transmission buffer.

(2) As a preferred feature, the transmission parameter controlling means includes: an evaluating unit which evaluates whether or not second transmission quality necessary for collectively transmitting downlink transmission data in the transmission buffer is higher than first transmission quality of the downlink radio channel indicated by the downlink quality information; and a transmission parameter adjusting unit which adjusts the transmission parameter in such a manner that the transmission quality of the downlink radio channel becomes higher, in response to determination by the evaluating unit that the second transmission quality is higher than the first transmission quality.

(3) As yet another preferred feature, the transmission parameter adjusting unit is operable to adjust the transmission parameter determined by the transmission parameter determining means in such manner that the transmission parameter is maintained or the transmission quality of the downlink radio channel becomes lower, in response to determination by the evaluating means that the first transmission quality is equal to or higher than the second transmission quality.
(4) As still another preferred feature, the transmission parameter controlling means is operable to control the transmission parameter determined by the transmission determining means based on assurance quality information being indicative of quality to be assured for the downlink radio channel in addition to the downlink channel quality information and the information relating to the downlink transmission data amount in the transmission buffer.

(5) As a further preferred feature, the transmission parameter controlling means includes: a data rate calculating unit which calculates a downlink transmission data rate based on response information, indicating normal or abnormal reception of the downlink transmission data, notified from the radio terminal; a comparing unit which compares a downlink transmission data rate calculated by the data rate calculating unit with a predetermined assurance data rate as the assurance quality information; an evaluating unit which evaluates whether or not second transmission quality necessary for collectively transmitting downlink transmission data in the transmission buffer is higher than first transmission quality of the downlink radio channel indicated by the downlink channel quality information; and a transmission parameter adjusting unit which adjusts the transmission parameter in such a manner that quality of the downlink radio channel becomes higher, in response to indication by the comparing unit, as a result of comparison, that the assurance data rate is higher than the downlink transmission data rate, and also, determination by the evaluating unit that the second transmission quality is higher than the first transmission quality.

(6) As a yet further preferred feature, the transmission parameter adjusting unit is operable to adjust the transmission parameter determined by the transmission parameter determining means in such a manner that the transmission parameter is maintained or the transmission quality of the downlink radio channel becomes lower, in response to determination by the evaluating unit that the first transmission quality is equal to or higher than the second transmission quality.
(7) As a still further preferred feature, the transmission parameter is a transmission block size of the downlink transmission data.

(8) As another preferred feature, the transmission parameter includes a transmission block size of the downlink transmission data and at least any one or more of the modulation method of the downlink transmission data, the number of multi-codes, the number of sub-carriers, and a transmission power value.
(9) As another generic feature, there is provided a downlink transmission controlling method for a radio transmission apparatus including a transmission buffer which is operable to temporarily hold transmission data to be transmitted to a radio terminal through a downlink channel. The method comprises the steps of: determining a downlink transmission parameter relating to transmission quality of the downlink radio channel based on downlink channel quality information indicating reception quality of the downlink channel on the radio terminal; and controlling the transmission parameter based on at least the downlink channel quality information and information relating to an amount of downlink transmission data in the transmission buffer.

(10) As a preferred feature, the downlink transmission controlling method comprises the steps of: evaluating whether or not second transmission quality necessary for collectively transmitting downlink transmission data in the transmission buffer is higher than first transmission quality of the downlink radio channel indicated by the downlink quality information; and adjusting the transmission parameter in such a manner that the transmission quality of the downlink radio channel becomes higher, in response to determination that the second transmission quality is higher than the first transmission quality.

(11) As another preferred feature, the controlling method comprises the step of adjusting the determined transmission parameter in such manner that the transmission parameter is maintained or the transmission quality of the downlink radio channel becomes lower, upon determination that the first transmission quality is equal to or higher than the second transmission quality.
(12) As yet another preferred feature, the downlink transmission controlling method comprises the step of controlling the determined transmission parameter based on assurance quality information being indicative of quality to be assured for the downlink channel in addition to the downlink channel quality information and the information relating to the downlink transmission data amount in the transmission buffer.

(13) As a still another preferred feature, the downlink transmission controlling method comprises the steps of: calculating a downlink transmission data rate based on response information, indicating normal or abnormal reception of the downlink transmission data, notified from the radio terminal; comparing the calculated downlink transmission data rate with a predetermined assurance data rate as the assurance quality information; evaluating whether or not second transmission quality necessary for collectively transmitting downlink transmission data in the transmission buffer is higher than first transmission quality of the downlink radio channel indicated by the downlink channel quality information; and adjusting the transmission parameter in such a manner that quality of the assurance data rate is higher than quality of the downlink radio channel becomes higher, in response to a result of the comparison indicating that the assurance data rate is higher than the downlink transmission data rate, and also, a result of the evaluation indicates that the second transmission quality is higher than the first transmission quality.

(14) As a further preferred feature, the downlink transmission controlling method comprises the step of adjusting the determined transmission parameter in such a manner that the transmission parameter is maintained or the transmission quality of the downlink radio channel becomes lower, in response to determination that the first transmission quality is equal to or higher than the second transmission quality.
(15) As a yet further preferred feature, in the downlink transmission controlling method, the transmission parameter is a transmission block size of the downlink transmission data.

(16) As a still further preferred feature, the transmission parameter includes a transmission block size of the downlink transmission data and at least any one or more of the modulation method of the downlink transmission data, the number of multi-codes, the number of sub-carriers, and a transmission power value.

### EFFECTS OF THE PRESENT INVENTION

In comparison with the preferred art, the present invention guarantees the following advantageous results. Since the present invention controls (determines) transmission parameters for transmission quality of a downlink channel, such as a transmission block size, the number of multi-codes (or the number of sub-carriers), and a modulation method, for a downlink radio channel, with consideration paid to a transmission data amount accumulated in a transmission buffer, it is possible to significantly improve a throughput of the downlink radio channel.

### BRIEF DESCRIPTION OF THE DRAWINGS

[FIG. 1] is a block diagram illustrating a construction of a radio communication system according to a first embodiment of the present invention;
[FIG. 2] is a diagram illustrating an example of transmission parameter determining table for use in a TxCQI determiner of a network entity shown in FIG. 1;
[FIG. 3] is a flowchart for describing an operation (determination of transmission parameters) of the radio communication system shown in FIG. 1;
[FIG. 4] is a diagram illustrating the number of reception bits of a certain user (mobile station) together with time, in a case where a consideration is paid to buffer occupation rate information and in a case where a consideration is not paid to the buffer occupation rate information;
[FIG. 5] is a block diagram illustrating a construction of a radio communication system according to a second embodiment of the present invention;
[FIG. 6] is a flowchart for describing an operation (determination of transmission parameters) of the radio communication system shown in FIG. 5; and
[FIG. 7] is a block diagram illustrating a construction of a previous mobile communication system.

### DESCRIPTION OF REFERENCE CHARACTERS

1...network entity (radio transmission apparatus)
   1-1...transmission data
   1-2...data buffer (transmission buffer)
   1-3...coder (coding unit)
   1-4...TFRC selector
   1-5...modulator (modulating unit)
   1-6...control data generator
   1-7...control channel transmitter
   1-8...data transmitter
   1-9...transmission power controller
   1-10...feedback data receiver
   1-11...transmission CQI information (TxCQI) determiner
   1-11A...evaluator
   1-11B, 1-11c...transmission parameter adjuster
   1-12...comparator
   1-13...bit rate calculator
   1-14...ACK/NACK detector
   1-15...CQI detector
   1-16...assurance bit rate
2...mobile station (radio terminal)
   2-1...control channel (CH) receiver
   2-2...SIR measuring unit
   2-3...SIR-CQI converter
   2-4...data channel (CH) receiver
   2-5...ACK/NACK evaluator
   2-6...feedback data generator
   2-7...feedback data transmitter
   3...transmission parameter determining table

### BEST MODE FOR CARRYING OUT THE INVENTION

Embodiments of the present invention will now be described with reference to the relevant accompanying drawings.

### [A] First Embodiment

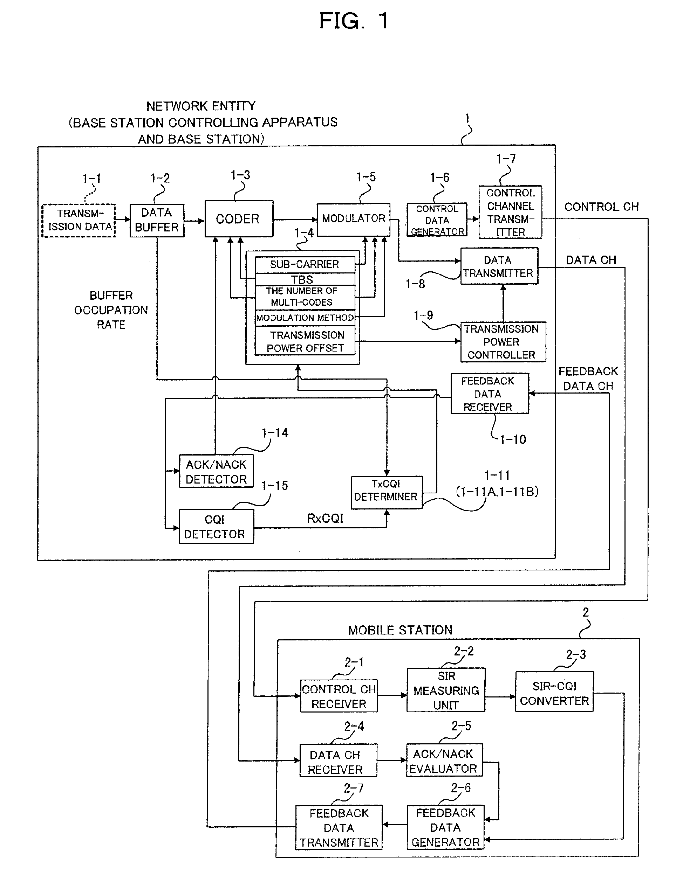

FIG. 1 is a block diagram illustrating a construction of a radio communication system according to a first embodiment of the present invention. The mobile communication terminal of FIG. 1, also, includes: a network entity (radio transmission apparatus) 1 having functions of a radio network controller (RNC) and a base transceiver network (BTS); and one or more mobile stations (radio terminals) 2, such as mobile telephones, which are capable of accessing the network entity 1 to communicate wirelessly with the network entity 1. The network entity 1 has a function of adaptively changing transmission parameters for downlink transmission quality such as a transmission block size, the number of dispersion codes (the number of multi-codes), and a modulation method, etc., of downlink transmission data to the mobile stations 2, in accordance with reception circumstance (reception quality) of the downlink transmission data.

Thus, in the present example, also, the network entity 1 has a data buffer 1-2, a coder (coding unit) 1-3, a TFRC selector 1-4, a modulator (modulation unit) 1-5, a control data generator 1-6, a control channel transmitter 1-7, a data transmitter 1-8, a transmission power controller 1-9, a feedback data receiver 1-10, a transmission CQI information (TxCQI) determiner 1-11, a ACK/NACK detector 1-14, and a reception CQI information (RxCQI) detector 1-15.

On the other hand, a mobile station 2 has functions of measuring downlink reception quality and notifying the network entity 1 of the measurement result. For this purpose, the present example, also, has, for example, a control channel (CH) receiver 2-1, an SIR measuring unit 2-2, an SIR-CQI converter 2-3, a data channel (CH) receiver 2-4, an ACK/NACK evaluator 2-5, a feedback data generator 2-6, and a feedback data transmitter 2-7.

Here, in the network entity 1, the data buffer (transmission buffer) 1-2 temporarily holds transmission data 1-1 which is to be transmitted to the mobile station 2 through a radio channel (downlink). The coder 1-3 performs coding of transmission data 1-1 from the data buffer 1-2 in accordance with a transmission block size (TBS) selected by the TFRC selector 1-4 and the number of multi-codes, or the like.

The TFRC selector (transmission parameter determining means) 1-4 selects (determines) transmission parameters [transmission block size (TBS), the number of sub-carriers, the number of multi-codes, the modulation method, the transmission power value, etc.] for downlink transmission quality based on the reception CQI information which is downlink channel quality information for the downlink at the mobile station 2.
The modulator 1-5 modulates transmission data 1-1 in accordance with transmission parameters, such as the number of sub-carriers, the number of multi-codes, the modulation method, etc., which are selected by the TFRC selector 1-4.

The control data generator 1-6 generates control data to be transmitted to the mobile station 2 through a downlink control channel, and for example, it is capable of generating control data or the like for SIR measurement in the mobile station 2. The control channel transmitter 1-7 transmits control data generated by the control data generator 1-6 as downlink control channel data.

The data transmitter 1-8 transmits the transmission data 1-1, which has been modulated by the modulator 1-5, through a downlink data channel, and its transmission power is controlled by the transmission power controller 1-9. The transmission power controller 1-9 controls downlink transmission power from the data transmitter 1-8 in accordance with the sub-carrier, the transmission block size, the number of multi-codes, and an offset value of the transmission power, selected by the TFRC selector 1-4, according to the modulation method.

The feedback data receiver 1-10 receives feedback data (uplink communication data) transmitted from the mobile station 2 through an uplink feedback back channel (uplink). The ACK/NACK detector 1-14 detects ACK, which indicates normal reception of the transmission data 1-1, or NACK, which indicates abnormal reception of data 1-1. Upon detection of NACK, the coder 1-3 is notified of such, and retransmission of the transmission data 1-1 which has already been transmitted is started.

The CQI detector 1-15 detects reception CQI information (RxCQI), which is reception quality information on the mobile station 2, from feedback data received by the feedback data receiver 1-10.
The TxCQI determiner (transmission parameter controlling means) 1-11 determines transmission CQI information (TxCQI), which functions as selection reference of transmission parameter to be selected by the TFRC selector 1-4 (that is, controls transmission parameters determined by the TFRC selector 1-4), based on the reception COI information (RxCQI) detected by the CQI detector 1-15 and a buffer occupation rate information (that is, information about the amount of accumulation of not yet transmitted downlink data) in the data buffer 1-2.
On the basis of the transmission CQI information determined here, the TFRC selector 1-4 selects (controls) downlink transmission parameters such as the number of sub-carriers, the transmission block size, and the number of multi-codes.

For example, if the amount of downlink not yet transmitted data (the number of bits) in the data buffer 1-2 is not smaller than the transmission block size (the number of bits) determined based on CQI information from the mobile station 2, the number of multi-codes (the number of sub-carriers), the transmission power value, and the transmission block size are increased. Hereby, the not yet transmitted data becomes possible to be collectively transmitted. In contrast, if the amount of not yet transmitted data is smaller than the transmission block size determined based on CQI information from the mobile station 2, control (determination of transmission parameters) is performed in such a manner that the number of multi-codes (sub-carriers), the transmission power value, and the transmission block size are maintained or decreased.

That is, the TxCQI determiner 1-11 evaluates whether or not second transmission quality, which is necessary for collectively transmitting downlink data in the data buffer 1-2, is higher than downlink first transmission quality, which is indicated by the reception CQI information. If the second transmission quality is higher than the first transmission quality, the TxCQI determiner 1-11 adjusts transmission parameters in such a manner that downlink transmission quality becomes higher. If the the first transmission quality is higher than the second transmission quality, the TxCQI determiner 1-11 adjusts transmission parameters selected by the TFRC selector 1-4 in such a manner that the transmitted parameters are maintained or the downlink transmission quality becomes lower.

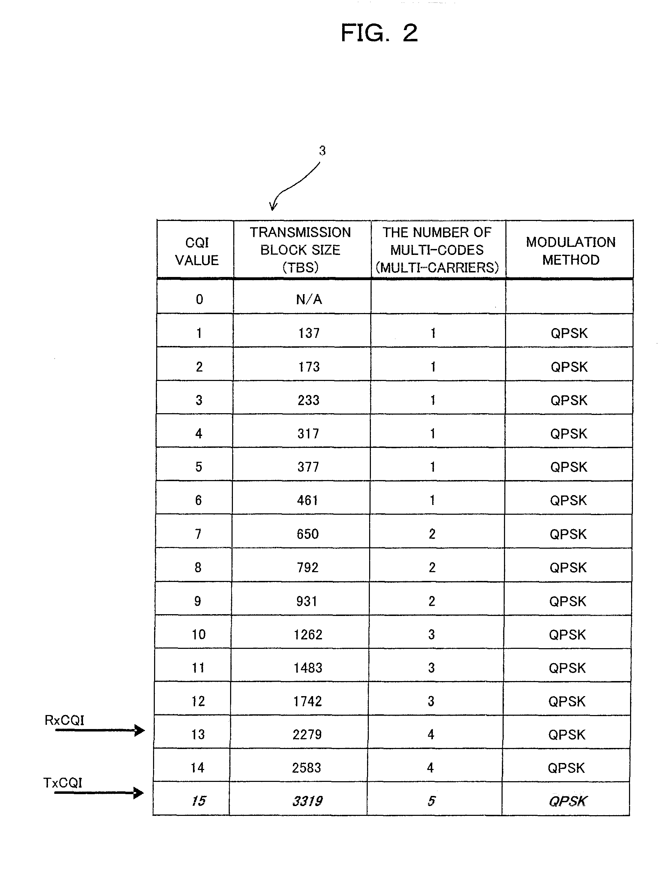

For this purpose, as shown in FIG. 2, the TxCQI determiner 1-11 converts reception quality information for downlink of the mobile station 2 [for example, a value realizing a block error rate (BLER) = 10%] is converted into a number as a value of CQI, and holds data in a form of a table (hereinafter referred to as transmission parameter determining table 3) in which a transmission block size (TBS) corresponding to the CQI value, the number of multi-codes, the number of sub-carriers, and a modulation method are associated with one another. By means of referring to the table 3, it is possible to uniquely determine transmission parameters such as the transmission block size (TBS), the number of multi-codes, and the modulation method. The CQI value relates to transmission power in such a manner that increase of CQI value by 1 also increases transmission power by 1 dB.

Hence, for example, referring to the above-mentioned transmission parameter determining table 3, it shows that when CQI value = 10, the transmission block size = 1262 bits, the modulation method = QPSK, the number of multi-codes =3, and thus, if transmission is performed using the transmission parameters and desired transmission power (a known value beforehand in constructing the system), it is considered that transmission can be performed with an error rate of BLER = 10%.

In comparison with the previous art, the present embodiment differs from the previous art in that buffer occupation rate information is provided from the transmission data buffer 1-2 to the TxCQI determiner 1-11, in which transmission parameters, such as a transmission powervalue, a transmission block size, a modulation method, the number of multi-codes, and the number of sub-carriers, are determined with consideration paid to the buffer occupation rate information.
The following is an example of a specific determination method. That is, assuming that information (RxCQI) of CQI = 13 is transmitted from the mobile station 2, reference to this CQI =13 in the transmission parameter determining table 3 indicates that the transmission block size = 2279 bits, the modulation method =QPSK, the number of multi-codes = 4 . At that time, for example, it is assumed that data of 3319 bits remains in the data buffer 1-2. Then, for the purpose of collectively transmitting 3319 bits, the TxCQI determiner 1-11 realizes the number of multi-codes = 5 and the CQI value = 15, and raises the transmission power by 2 dB. This makes it possible to transmit the data as BLER = 10%. As a result, the TxCQI determiner 1-11 selects (determines) a CQI value =15 as TxCQI, and instructs it to the TFRC selector 1-4.

Next, in the mobile station 2 of FIG. 1, the control channel receiver 2-1 receives control data transmitted from the network entity 1 through an uplink control channel. The SIR measuring unit 2-2 measures reception SIR based on the control data received by the control channel receiver 2-1. The SIR-CQI converter 2-3 converts the reception SIR measured by the SIR measuring unit 2-2 into reception CQI information.

The data channel receiver 2-4 receives transmission data 1-1 transmitted from the network entity 1 through an uplink data channel. The ACK/NACK evaluator 2-5 evaluates whether or not the data channel receiver 2-4 has normally received the transmission data 1-1. If the data has been normally received, ACK determination is made, on the other hand, if the data has not normally received, NACK determination is made, as a response to the network entity 1.

The feedback data generator 2-6 generates downlink feedback data to be transmitted to the network entity 1. For example, the feedback data generator 2-6 generates the CQI information obtained by the SIR-CQI converter 2-3 and the evaluation result (ACK/NACK) obtained by the ACK/NACK evaluator 2-5 as feedback data . The feedback data transmitter 2-7 transmits the feedback data generated by the feedback data generator 2-6 to the network entity 1 through a downlink feedback data channel.

The following is a description of an operation of a previous mobile communication system having a structure described above. In the network entity 1, control data is transmitted to the mobile station 2 through a control channel by the generator 1-6 and the network entity 1-7, and the transmission data 1-1 subjected to coding and modulation by the control data generator 1-6, the control channel transmitter 1-7, the coder 1-3, and the modulator 1-5 is transmitted to the mobile station 2 through a downlink data channel by the data transmitter 1-8.

In the mobile station 2, reception SIR is measured by the SIR measuring unit 2-2 based on the above-mentioned control data received by the control channel receiver 2-1 through the downlink control channel, and the measured value is converted into reception CQI information by the SIR-CQI converter 2-3. This reception CQI information is transmitted to the network entity 1 by the feedback data generator 2-6 and the feedback data transmitter 2-7, as feedback data, through an uplink feedback data channel.

In addition, in the mobile station 2, the ACK/NACK evaluator 2-5 performs ACK/NACK evaluation for the transmission data 1-1 received by the data channel receiver 2-4 through the downlink data channel, and its result (ACK/NACK) is transmitted to the network entity 1 by the feedback data generator 2-6 and the feedback data transmitter 2-7 through an uplink feedback data channel.

On the other hand, in the network entity 1, the modulator 1-5 detects reception CQI information (RxCQI) transmitted (notified) from the mobile station 2 through an uplink feedback data channel, as described above, and the TxCQI determiner 1-11 determines transmission CQI information (TxCQI) based on the reception CQI information and the buffer occupation rate information of the data buffer 1-2 at that time, and the TFRC selector 1-4 adaptively selects (changes) the transmission block size, the number of multi-codes (the number of sub-carriers), the modulation method, etc., for the transmission data 1-1.

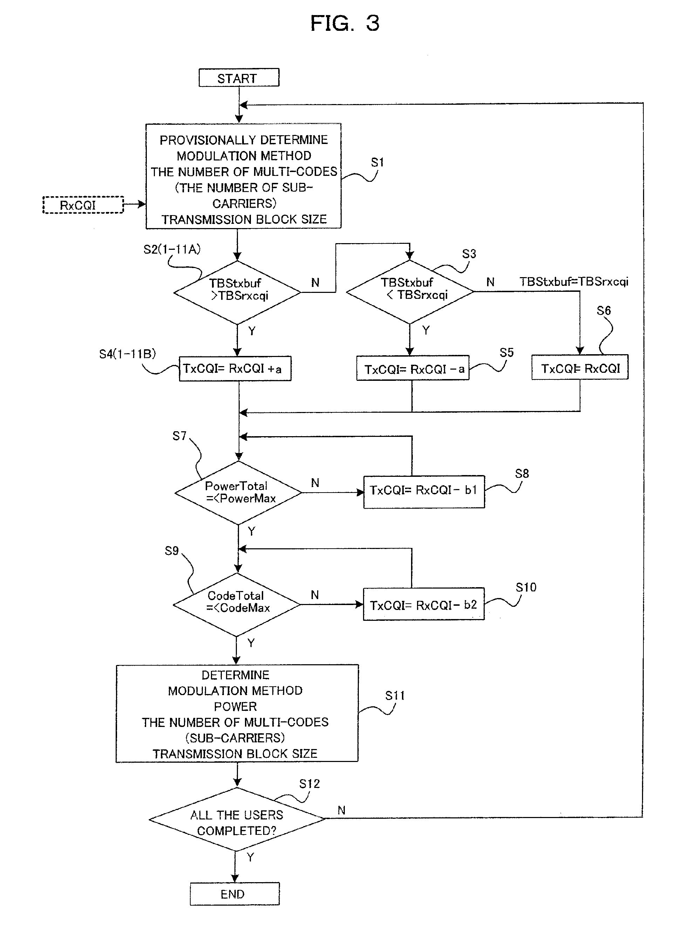

A description will be made hereinafter of such a specific determination operation with reference to the flowchart of FIG. 3. First of all, the TxCQI determiner 1-11 refers to the transmission parameter determining table 3 shown in FIG. 2 based on reception CQI information (RxCQI) to provisionally determine downlink transmission parameters such as the modulation method, the number of multi-codes(the number of sub-carriers), the transmission block size (TBSrxcqi) (step S1). Then, the TxCQI determiner 1-11 calculates the block size (TBStxbuf) of the data stored in the data buffer 1-2 at the current time from the buffer occupation rate information for the data buffer 1-2, and compares the block size and provisionally determined transmission block size (TBSrxcqi) to evaluate whether or not the block size (TBStxbuf) which has not yet been transmitted exceeds the provisionally determined transmission block size (TBSrxcpi) (step S2).

As a result, in a case where the block size (TBStxbuf) of the not yet transmitted data exceeds the provisionally determined transmission block size (TBSrxcqi) (that is, TBStxbuf > TBSrxcqi), the TxCQI determiner 1-11 adds an offset value *a* to the reception CQI information (RxCQI) to obtain transmission CQI information (TxCQI) (TxCQI = RxCQI + a; from Y route of step S2 through step S4).
That is, by means of performing the above step S2 and S4, the TxCQI determiner 1-11 functions as an evaluator 1-11A which evaluates whether or not the transmission block size, which is the second transmission quality necessary for collectively transmitting the transmission data 1-1 in the data buffer 1-2, is greater than the transmission block size, which is the downlink first transmission quality indicated by the reception CQI information, and also functions as a transmission parameter adjustor 1-11B which adj usts transmission parameters (transmission block size) in such a manner that the downlink transmission quality becomes higher upon evaluation by the evaluator 1-11A that the second transmission quality is higher than the above-mentioned first transmission quality.

Here, the above offset value a can be obtained, for example, by obtaining a collectively transmittable CQI value based on the block size (TBStxbuf) of the not yet transmitted data with reference to the transmission parameter determining table 3 of FIG. 2, and by obtaining a difference between it and the reception CQI information (RxCQI). In the above-described example of FIG. 2, the offset value *a* = 15 - 13 = 2, and the transmission CQI information (TxCQI) = 13 (RxCQI) + 2 = 15 . In this instance, the offset value a is changeable (adjustable) in accordance with the degree of convergence.

On the other hand, if the block size (TBStxbuf) of the not yet transmitted data is smaller than the provisionally determined transmission block size (TBSrxcqi) as a result of the above comparison of the block sizes (that is, TBStxbuf < TBSrxcqi), the TxCQI determiner 1-11 subtracts the offset value *a* from the reception CQI information (RxCQI) to obtaine transmission CQI information (TxCQI) (TxCQI = RxCQI - a; from N route of step S2 thorugh step S3 and from Y route of step S3 through step S5).

Further, as a result of comparison of the above block sizes, if the block size (TBStxbuf) of the not yet transmitted data is identical to the provisionally determined transmission block size (TBSrxcqi) (that is, TBStxbuf = TBSrxcqi), the TxCQI determiner 1-11 recognizes the reception CQI information itself as the transmission CQI information (TxCQI = RxCQI; from N route of step S2 and step S3 through step S6).
That is, as a result of the above step S3, S5, and S6, if the evaluator 1-11A evaluates that the transmission block size, which is the above first transmission quality, is equal to or greater than the transmission block size, which is the second transmission quality, the TxCQI determiner 1-11 (transmission parameter adjuster 1-11B) adjusts the transmission parameters (transmission block size) selected by the TFRC selector 1-4 in such a manner that the transmission parameters(transmission block size) is maintained or the downlink transmission quality becomes lower by means of performing the above steps S3, S5, and S6.

Next, the TxCQI determiner 1-11 checks whether or not a total power value (Power Total) does not exceed a regulation maximum transmission power value (Power Max) in a case where transmission is performed using the transmission CQI information determined as described above (step S7) . If the total transmission power value exceeds the regulation maximum transmission power value (Power Max), the TxCQI determiner 1-11 subtracts an offset value b1 (a > b1 > 0) from the reception CQI information (TxCQI) to obtain transmission CQI information(TxCQI = RxCQI - b1) and checks the total transmission power (Power Total) once again (from N route of step S7 through step S8) . In this instance, such transmission power value check processing is repeated until the total transmission power value (Power Total) becomes not greater than the maximum transmission power value (Power Max).

If the total transmission power value (Power Total) is not greater than the regulation maximum transmission power (Power Max), the TxCQI determiner 1-11 then checks whether or not the total number of multi-codes (Code Total) does not exceed the regulation maximum value (Code Max) in a case where the determined transmission CQI information is used (from Y route of step S7 through step S9). If the number of total multi-codes exceeds the maximum value (Code Max), the TxCQI determiner 1-11 subtracts an offset value b2 (a > b2 >0) from the reception CQI information (TxCQI) to obtain transmission CQI information (TxCQI = RxCQI - b2), and checks the total number of multi-codes (Code Total) once again (from N route of step S9 to step S10). In this instance, such check processing of the number of codes is repeated until the number of multi-codes (Code Total) becomes not greater than the maximum value (Code Max).

Then, if the number of multi-codes (Code Total) is not greater than the maximum value (Code Max), the TxCQI determiner 1-11 eventually determines transmission parameters, such as a modulation method, the number multi-codes (the number of sub-carriers), and a transmission block size or the like, based on the finally determined transmission CQI information (TxCQI), with reference to the transmission parameter determining table 3 of FIG. 2, and notifies the TFRC selector 1-4 of such (from Y route of step S9 to step S11). As a result, transmission of the transmission data 1-1 is performed with the finally determined transmission parameters.

After that, the TxCQI determiner 1-11 checks whether or not the above-described transmission parameter determination processing has been completed for all the users (mobile stations 2) (step S12). If the processing is not yet completed for all the users (mobile station 2), processing of the above step S1 and from then on are repeated until the processing is completed for all the users (mobile station 2) (N route of step S12).
In this instance, in the present example, also, the ACK/NACK detector 114 [sic] detects ACK or NACK transmitted from a mobile station 200[sic] through a feedback data channel. Upon detection of ACK, the next transmission data 101[sic] is taken out of the data buffer 102[sic], and is then subjected to coding and modulation before being transmitted. On the other hand, upon detection of NACK, the transmission data 101 [sic] is transmitted once again.

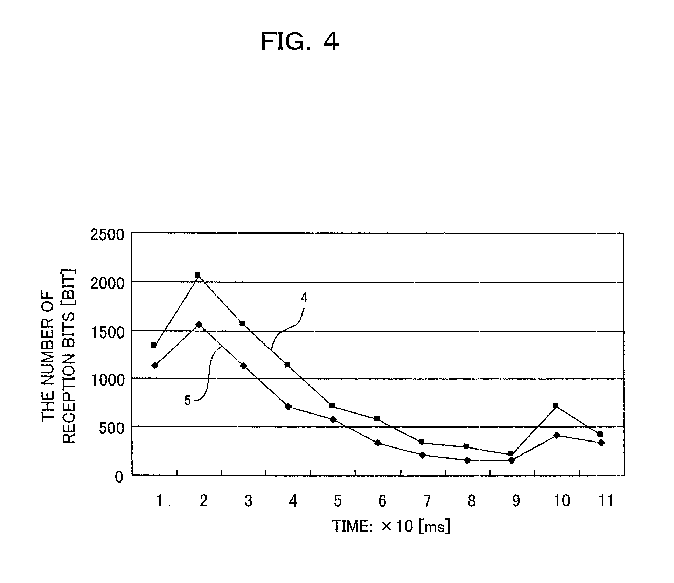

As described above, by means of adaptively updating transmission parameters based on the reception CQI information notified from a mobile station 2 and buffer occupation rate information, it becomes possible to transmit downlink transmission data in a transmission buffer 1-2 collectively as much as possible within permission ranges of a total transmission power value and the number of multi-codes, so that a downlink throughput is significantly improved.
For example, FIG. 4 shows the number of reception bits of a certain user (mobile station 2) with time both in a case where buffer occupation rate information is taken into consideration and in a case where it is not taken into consideration. In this instance, reference character 4 indicates reception characteristics in a case where buffer occupation rate information is taken into account as in the present embodiment, and reference character 5 indicates reception characteristics in a case where buffer occupation rate information is not taken into account. As shown in FIG. 4, a throughput is improved when buffer occupation rate information in the transmission buffer 1-2 is taken into account. This is because it is possible to allocate greater transmission power and a greater number of codes to a user (mobile station 2) whose propagation circumstance is particularly poor, thereby enlarging a transmission block size, so that the throughput is improved.

### [B] Second Embodiment

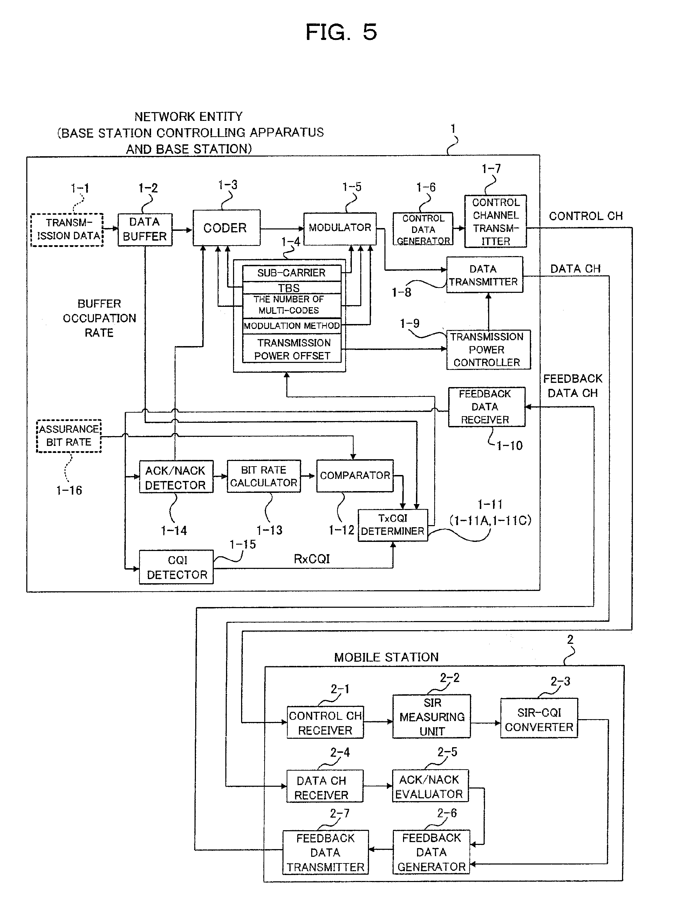

FIG. 5 is a block diagram showing a construction of a radio communication system according to a second embodiment. The mobile communication system of FIG. 5, as in the case of the first embodiment, includes : a network entity (radio transmission apparatus) 1 having functions of a radio network controller (RNC) and a base transceiver station (BTS); and one or more mobile stations (radio terminals) 2, such as mobile telephones, which are capable of accessing the network entity 1 to communicate wirelessly with the network entity 1. In comparison with the structure shown in FIG. 1, the second embodiment differs from the first embodiment in that a bit rate calculator 1-13 and a comparator 1-12 are added. In this instance, the other parts indicated by the reference characters already described are the same as or similar to those unless they are particularly referred to.

Here, the above-mentioned bit rate calculator (data rate calculator) 1-13 calculates downlink bit rates based on the detection result obtained by the ACK/NACK detector 1-14, that is, the response information indicating normal or abnormal downlink reception notified from the mobile station 2. For example, the bit rate calculator 1-13 is capable of calculating a downlink bit rate to the mobile station 2 based on the number of ACK detections with respect to transmission data 1-1 transmitted at a certain time t with a transmission block size [TBS(t)].

The comparator 1-12 compares the bit rate calculated by the bit rate calculator 1-13 and an assurance bit rate (which is set from an upper layer), which is assurance quality information to be assured about downlink in a band assurance service or the like. In the present example, the comparison result is provided to the TxCQI determiner 1-11 and used at the time of determination of transmission parameters in the TxCQI determiner 1-11.

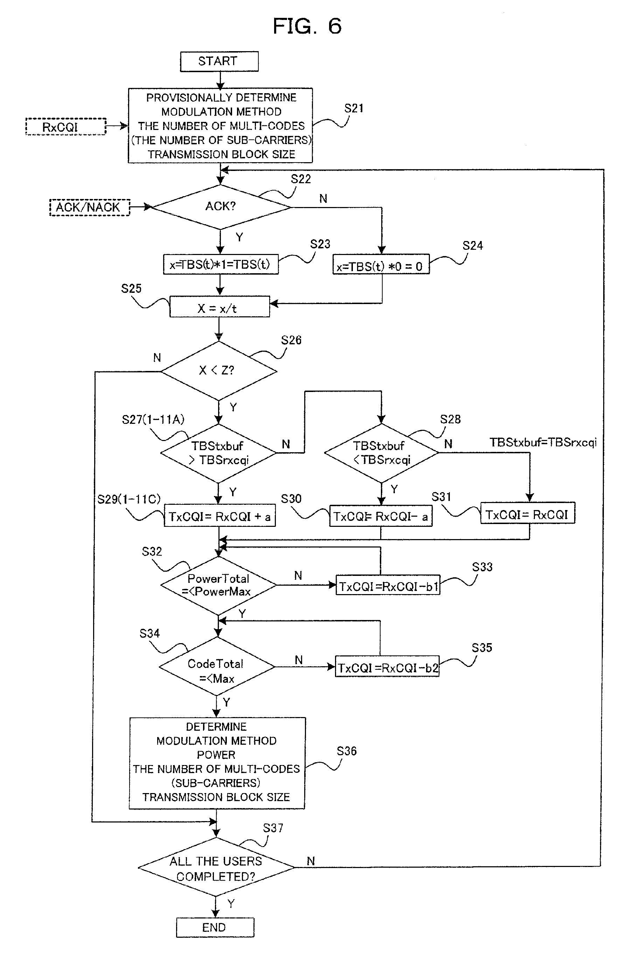

That is, the TxCQI determiner 1-11 of the present example determines transmission parameters with consideration paid to not only the reception CQI information and the buffer occupation rate information but to the assurance bit rate.
Hereinafter, referring to FIG. 6, a description will be made of the determination operation. First of all, in the network entity 1, the TxCQI determiner 1-11 refers to the transmission parameter determining table 3 of FIG. 2 based on the reception CQI information (RxCQI) to provisionally determine a modulation method, the number of multi-codes (sub-carriers), and a transmission block size (TBSrxcqi) (step S21). In addition, the bit rate calculator 1-13 monitors a detection result obtained by the ACK/NACK detector 1-14 (step S22). Every when ACK is detected, the transmission block size [TBS(t)] at that time is added cumulatively to calculate the transmission data amount (x) [x = TBS(t) x 1 =TBS(t); from Y route of step S22 through step S23]. When NACK is detected, the transmission data amount x is given as "0" [x = TBS(t) x 0 = 0; from N route of step S22 through step S24], and the bit rate calculator 1-13 calculates a transmission data amount (x) for unit time, that is, a downlink bit rate (X) (X = x/t; step S25).

After that, the comparator 1-12 compares the above calculated bit rate (X) with an assurance bit rate (Z), and its result is notified to the TxCQI determiner 1-11. The TxCQI determiner 1-11 checks whether or not the assurance bit rate (Z) is greater than the calculated bit rate (X) (step S26) . If the assurance bit rate is greater, as in the first embodiment, a block size (TBStxbuf) of transmission data accumulated in the transmission buffer 1-2 at the current time is calculated from buffer rate information about the transmission buffer 1-2, and compares the block size with the provisionally determined transmission block size (TBSrxcqi), thereby evaluating whether or not the block size (TBStxbuf) of not yet transmitted data exceeds the provisionally determined transmission block size (TBSrxcqi) (from Y route of step S26 through step S27).

As a result, the block size (TBStxbuf) of the not yet transmitted data exceeds the provisionally determined transmission block size (TBSrxcqi) (that is, TBStxbuf > TBSrxcqi), the TxCQI determiner 1-11 adds an offset value *a* to the reception CQI information (RxCQI) to obtain transmission CQI information (TxCQI) (TxCQI = RxCQI + *a*; from Y route of step S27 through step S29) . In this instance, in the present example, also, the offset value *a* can be obtained, for example, by means of obtaining a CQI value which can be collectively transmitted with reference to the transmission parameter determining table 3 of FIG. 2, and obtaining a difference between the above CQI value and reception CQI information (RxCQI). In addition, this offset value a can be changed (adjusted) in accordance with the degree of convergence.

That is, the TxCQI determiner 1-11 of the present example functions, by means of performing the above steps S26, S27, and S29, as an evaluator 1-11A which evaluates whether or not a transmission block size that is the second transmission quality necessary for collectively transmitting the transmission data 1-1 in the transmission buffer 1-2 is greater than a transmission block size that is the first downlink transmission quality indicated by the reception CQI information, and as a transmission parameter adjusting unit 1-11C which adjusts transmission parameters in such a manner that downlink transmission quality becomes higher, upon detection, as a result of comparison by the comparator 1-12, of the fact that the assurance bit rate is higher than the downlink bit rate, and also the fact that the transmission block size which is the second transmission quality is higher than the transmission block size that is the first transmission quality.

On the other hand, as a result of the above block size comparison, if the block size (TBStxbuf) of the not yet transmitted data is smaller than the provisionally determined transmission block size (TBSrxcqi) (that is, TBStxbuf < TBSrxcqi), the TxCQI determiner 1-11 subtracts an offset value a from the reception CQI information (RxCQI) to obtain transmission CQI information (TxCQI) (TxCQI = RxCQI - a; from N route of step S27 through step S28 and from Y route of step S28 through step S30).

Further, as a result of the block size comparison, if the block size (TBStxbuf) of the not yet tranmitted data is identical to the provisionally determined block size (TBSrxcqi) (that is, TBStxbuf = TBSrxcqi), the TxCQI determiner 1-11 copes with the reception CQI information as CQI information as it is (TxCQI = RxCQI; from N routes of step S27 and step S28 through step S31).
That is, in the present example, also, if the evaluator 1-11A evaluates that the transmission block size that is the above first transmission quality is identical to or greater than the second transmission quality, by means of performing the above steps S28, S30, and S31, the TxCQI determiner 1-11 (transmission parameter adjuster 1-11C) adjusts transmission parameters (transmission block size) selected by the TFRC selector 1-4 in such a manner that the transmission parameters (transmission block size) is maintained or the downlink transmission quality becomes lower.

Next, in the present example, also, the TxCQI determiner 1-11 checks whether or not a total transmission power (Power Total) in a case where transmission is performed using the transmission CQI information as described above, does not exceed the regulation maximum transmission power value (Power Max) (step S32) . If the total transmission power (Power Total) exceeds the maximum transmission power value (Power Max), the TxCQI determiner 1-11 subtracts an offset value b1 (a > b1 >0) from the reception CQI information (TxCQI) to obtain transmission CQI information (TxCQI = RxCQI - b1), and checks the total transmission power value (Power Total) once again (from N route of step S32 through step S33) . In this instance, such transmission power value check processing is repeated until the total transmission power value (Power Total) becomes not greater than the maximum transmission power value (Power Max).

If the total transmission power value (Power Total) is not greater than a regulation maximum transmission power value (Power Max), the TxCQI determiner 1-11 then checks whether or not the total number of multi-codes (Code Total) in a case where the determined transmission CQI information is used becomes not greater than the regulation maximum value (Code Max) (from Y route of step S32 through step S34). If the number of total multi-codes exceeds the maximum value (Code Max), the TxCQI determiner 1-11 subtracts an offset value b2 (a > b2 >0) from the reception CQI information(TxCQI) to obtain transmission CQI information (TxCQI = RxCQI - b2), and checks the number of total multi-codes (Code Total) (from N route of step S34 through step S35) once again. In this instance, such check processing of the number of codes is repeated until the number of multi-codes (Code Total) does not exceed the maximum value (Code Max).

Then, if the number of multi-codes (Code Total) is not greater than the maximum value (Code Max), the TxCQI determiner 1-11 eventually determines transmission parameters, such as a modulation method, the number of multi-codes (the number of sub-carriers), a transmission block size, etc., with reference to the transmission parameter determining table 3 of FIG. 2 based on the finally obtained transmission CQI information (TxCQI), and notifies the TFRC selector 1-4 of such (from Y route of step S34 through step S36) . As a result, transmission of the transmission data 1-1 with the finally determined transmission parameters is performed.

After that, the TxCQI determiner 1-11 checks whether or not the above-described transmission parameter determination processing has been completed for all the users (mobile stations 2) (step S37). If it has not yet been completed, the processing of S21 and from then on is repeated until the transmission parameter determination processing is completed for all the users (mobile stations 2) (N route of step S37) .
In this instance, in the above step S26, if the calculated bit rate (X) is not lower than the assurance bit rate (Z), it means that band assurance is established, and thus, the above-mentioned transmission parameters are not determined (updated), and the above transmission parameter determination processing is performed for another user (mobile station 2) (N route of step S26).

As described above, according to the present embodiment, a downlink bit rate to a mobile station 2 is calculated on the basis of ACK/NACK information which is response information indicating normal or abnormal reception of downlink transmission data 1-1 on a mobile station 2, and the obtained bit rate is compared with an assurance bit rate, and its comparison result is reflected to transmission parameter determination. This makes it possible to transmit downlink data in the transmission buffer 1-2 collectively as much as possible within permission ranges of a total transmission power value and the number of multi-codes while assuring an assurance bit rate in band assurance service, so that it is possible to significantly improve a downlink throughput while performing band assurance.

In this instance, the present invention should by no means be limited to the above-illustrated embodiments, and various changes or modifications may be suggested without departing from the gist of the invention.

### INDUSTRIAL APPLICABILITY

As described above, according to the present invention, transmission parameters for a downlink radio channel are controlled based on not only reception quality information in a mobile terminal but also information about a downlink data amount in a transmission buffer, so that it is possible to significantly improve a downlink radio channel throughput. Thus, the present invention is extremely useful in the radio communication technology field.

## Claims

1. A radio transmission apparatus, comprising:
a transmission buffer which temporarily holds transmission data to be transmitted to a radio terminal through a downlink channel;
transmission parameter determining means which determines a downlink transmission parameter relating to transmission quality of the downlink radio channel based on downlink channel quality information indicating reception quality of the downlink channel on the radio terminal; and
transmission parameter controlling means which controls a transmission parameter determined by said transmission parameter determining means, based on at least the downlink channel quality information and information relating to an amount of downlink transmission data in said transmission buffer.

2. A radio transmission apparatus as set forth in claim 1, wherein said transmission parameter controlling means includes:
an evaluating unit which evaluates whether or not second transmission quality necessary for collectively transmitting downlink transmission data in said transmission buffer is higher than first transmission quality of the downlink radio channel indicated by the downlink quality information; and
a transmission parameter adjusting unit which adjusts the transmission parameter in such a manner that the transmission quality of the downlink radio channel becomes higher, in response to determination by said evaluating unit that the second transmission quality is higher than the first transmission quality.

3. A radio transmission apparatus as set forth in claim 2, wherein said transmission parameter adjusting unit is operable to adjust the transmission parameter determined by said transmission parameter determining means in such manner that the transmission parameter is maintained or the transmission quality of the downlink radio channel becomes lower, in response to determination by said evaluating means that the first transmission quality is equal to or higher than the second transmission quality.

4. A radio transmission apparatus as set forth in claim 1, wherein said transmission parameter controlling means is operable to control the transmission parameter determined by said transmission determining means based on assurance quality information being indicative of quality to be assured for the downlink radio channel in addition to the downlink channel quality information and the information relating to the downlink transmission data amount in said transmission buffer.

5. A radio transmission apparatus as set forth in claim 4, wherein said transmission parameter controlling means includes:
a data rate calculating unit which calculates a downlink transmission data rate based on response information, indicating normal or abnormal reception of the downlink transmission data, notified from said radio terminal;
a comparing unit which compares a downlink transmission data rate calculated by said data rate calculating unit with a predetermined assurance data rate as the assurance quality information;
an evaluating unit which evaluates whether or not second transmission quality necessary for collectively transmitting downlink transmission data in said transmission buffer is higher than first transmission quality of the downlink radio channel indicated by the downlink channel quality information; and
a transmission parameter adjusting unit which adjusts the transmission parameter in such a manner that quality of the downlink radio channel becomes higher, in response to indication by said comparing unit, as a result of comparison, that the assurance data rate is higher than the downlink transmission data rate, and also, determination by said evaluating unit that the second transmission quality is higher than the first transmission quality.

6. A radio transmission apparatus as set forth in claim 5, wherein said transmission parameter adjusting unit is operable to adjust the transmission parameter determined by said transmission parameter determining means in such a manner that the transmission parameter is maintained or the transmission quality of the downlink radio channel becomes lower, in response to determination by said evaluating unit that the first transmission quality is equal to or higher than the second transmission quality.

7. A radio transmission apparatus as set forth in any one of claim 1 through claim 6, wherein the transmission parameter is a transmission block size of the downlink transmission data.

8. A radio transmission apparatus as set forth in any one of claim 1 through claim 6, wherein the transmission parameter includes a transmission block size of the downlink transmission data and at least any one or more of the modulation method of the downlink transmission data, the number of multi-codes, the number of sub-carriers, and a transmission power value.

9. A downlink transmission controlling method for a radio transmission apparatus including a transmission buffer which is operable to temporarily hold transmission data to be transmitted to a radio terminal through a downlink channel, said method comprising the steps of:
determining a downlink transmission parameter relating to transmission quality of the downlink radio channel based on downlink channel quality information indicating reception quality of the downlink channel on the radio terminal; and
controlling the transmission parameter based on at least the downlink channel quality information and information relating to an amount of downlink transmission data in said transmission buffer.

10. A downlink transmission controlling method for a radio transmission apparatus as set forth in claim 9, comprising the steps of:
evaluating whether or not second transmission quality necessary for collectively transmitting downlink transmission data in said transmission buffer is higher than first transmission quality of the downlink radio channel indicated by the downlink quality information; and
adjusting the transmission parameter in such a manner that the transmission quality of the downlink radio channel becomes higher, in response to determination that the second transmission quality is higher than the first transmission quality.

11. A downlink transmission controlling method for a radio transmission apparatus as set forth in claim 10, comprising the step of adjusting the determined transmission parameter in such manner that the transmission parameter is maintained or the transmission quality of the downlink radio channel becomes lower, upon determination that the first transmission quality is equal to or higher than the second transmission quality.

12. A downlink transmission controlling method as set forth in claim 9, comprising the step of controlling the determined transmission parameter based on assurance quality information being indicative of quality to be assured for the downlink channel in addition to the downlink channel quality information and the information relating to the downlink transmission data amount in said transmission buffer.

13. A downlink transmission controlling method for a radio transmission apparatus as set forth in claim 12, comprising the steps of:
calculating a downlink transmission data rate based on response information, indicating normal or abnormal reception of the downlink transmission data, notified from said radio terminal;
comparing calculated downlink transmission data rate with a predetermined assurance data rate as the assurance quality information;
evaluating whether or not second transmission quality necessary for collectively transmitting downlink transmission data in said transmission buffer is higher than first transmission quality of the downlink radio channel indicated by the downlink channel quality information; and
adjusting the transmission parameter in such a manner that quality of the downlink radio channel becomes higher, in response to a result of the comparison indicating that the assurance data rate is higher than the downlink transmission data rate, and also, a result of the evaluation indicates that the second transmission quality is higher than the first transmission quality.

14. A downlink transmission controlling method for a radio transmission apparatus as set forth in claim 13, comprising the step of adjusting the determined transmission parameter in such a manner that the transmission parameter is maintained or the transmission quality of the downlink radio channel becomes lower, in response to determination that the first transmission quality is equal to or higher than the second transmission quality.

15. A downlink transmission controlling method for a radio transmission apparatus as set forth in any one of claim 9 through claim 14, wherein the transmission parameter is a transmission block size of the downlink transmission data.

16. A downlink transmission controlling method for a radio transmission apparatus as set forth in any one of claim 9 through claim 14, wherein the transmission parameter includes a transmission block size of the downlink transmission data and at least any one or more of the modulation method of the downlink transmission data, the number of multi-codes, the number of sub-carriers, and a transmission power value.
